# EUROPEAN PATENT SPECIFICATION

(11) **EP 1 377 446 B1**
(45) Date of publication and mention of the grant of the patent: **23.05.2007**
(21) Application number: 02713041.8
(22) Date of filing: 21.03.2002
(51) Int. Cl.: B32B 27/20, B32B 27/32

(54) **SYNTHETIC PAPER**
SYNTHETISCHES PAPIER
PAPIER SYNTHETIQUE

(30) Priority: 23.03.2001 GB 0107342
(43) Date of publication of application: 07.01.2004
(73) Proprietor: ARJOBEX LIMITED, Clacton-on-Sea, Essex CO15 4NS (GB)
(72) Inventor: DALGLEISH, David Thomson, Frinton-on-Sea, Essex CO13 9HN (GB); COOPER, Jonathan James, Colchester, Essex CO7 6ES (GB); SANDS, Matthew Richard, Colchester, Essex CO6 4AL (GB)
(74) Representative: Raynor, Simon Mark
(86) International application number: PCT/GB2002/001355
(87) International publication number: WO 2002/076733

(56) References cited:
- EP-A- 0 521 479
- EP-A- 0 703 071
- WO-A-98/32598

## Description

The present invention relates to a composite plastics film or sheet having an external printable surface, for example a synthetic paper. In particular this invention relates to an improved synthetic paper suitable for use in in-mould labelling (IML).

The term "synthetic paper" is used herein and throughout the specification to mean plastics film and sheet products having a feel and printability similar to cellulose paper. It has been recognised that plastics sheet of these types can provide an improved alternative to paper where durability and toughness are required. Plastics sheets produced from polyolefins have several advantages over other plastics since they offer UV resistance, good tear strength and the ability to be recycled in many post-consumer waste applications.

Synthetic papers have been produced commercially by the plastics industry for many years and have taken a number of different forms. They have included products having voided (i.e. multicellular) or unvoided structures. Plastics substrates are generally impervious to materials such as printing inks. Thus, they tend to be unsuitable for direct use in ink-based printing processes because the ink has a tendency to remain at the surface of the substrate, without being absorbed. It is well known to modify the surface characteristics of a plastics substrate by applying an absorbent coating composition to the substrate's surface. The coating composition comprises an absorbent filler, which renders the substrate more absorbent to ink, and a polymeric binder, which binds the filler to the substrate's surface.

Synthetic papers and their method of preparation have been described in, for example, GB 1470372A and EP0703071A. These materials are commonly used for the production of labels for in-mould labelling (IML) processes, where a label is incorporated inside the mould in which a blow-moulded plastics article is to be blown. The label adheres to the plastic surface during blow-moulding, thereby providing a more strongly bonded and integral label than can be achieved by attaching a label to a finished article. Conventionally the material, which may have an absorbent coating on one or both sides of a base layer, is printed on one side and also has to be processed to have a heat-activated adhesive coated on to the second side. This adhesive is used to give a strong adhesion between the label and the container to which it is being attached. As well as the strength of adhesion, another requirement for the IML process is that the labels, once attached, are substantially free from blistering, which is caused by air being trapped between the label and the surface of the article during the blow-moulding process. Without adhesive, adhesion of the label is poor, and substantial blistering is frequently encountered. Blistering can be minimised by embossing the adhesive on the surface of the label.

EP-0521479-A2 describes an in-mould labelling process, in which the label is composed of a base layer having on one side thereof a heat-sealable resin layer comprising a mixture of two thermoplastic resins with different melting temperatures.

WO 98/32598 describes an in-mould label comprising a core layer and a heat seal layer having a peak melt temperature of less than about 110°C.

We have found that it is possible to formulate the synthetic paper used in labels for in-mould labelling so that a separate adhesive layer is not necessary.

Accordingly, one aspect of the present invention provides a composite plastics sheet that is suitable for use in in-mould labelling and is printable on at least one surface, which comprises a base layer and optionally a printable layer forming the printable surface, the base layer comprising a synthetic paper that is primarily of HDPE and includes a voided, biaxially orientated core layer containing a voiding agent and a filler, and a co-extruded layer on each face of the core layer; characterised in that the base layer has a density of 0.7g/cm³ or less.

The composite plastics sheet is a synthetic paper. The synthetic paper comprises a base layer and a printable surface. The base layer comprises a core layer and co-extruded face layers. The surface of the base layer may itself be printable, or a printable surface may be added as an additional printable coating.

We have found that reducing the density of the base layer of the synthetic paper that forms the label results in a label having much improved adhesion compared with an equivalent synthetic paper of higher density base layer, such that the label is suitable for use in in-mould labelling without the need for separate application of a heat-activated adhesive. A typical density range for the base layer is from 0.3 to 0.65 g/cm³, preferably 0.45 to 0.65 g/cm³ and more preferably 0.55 to 0.65 g/cm³.

A further aspect of the invention provides a blow-moulded article having a label attached thereto by in-mould labelling, wherein the label comprises a composite plastics sheet as defined above.

The sheet of the present invention may be formed in a known manner, either:
A. by co-extrusion of the composite from two or more compositions to form the core layer and the outer co-extruded layers, or
B. by applying a coating of a printable layer on the surface of a sheet produced by method (A) above.

Preferably the composite plastics sheet of the invention comprises a core layer of voided, biaxially orientated HDPE sheet, having on one side a co-extruded surface layer selected to provide good heat-seal adhesion to blow-moulded bottles, typically high density polyethylene (HDPE) bottles, and on the opposite side a co-extruded surface layer and a surface coating of an absorbent material suitable for printing thereupon.

The core layer comprising HDPE, filler and the voiding agent may have other components therein such as pigments, other fillers, rubbers and the like. Thus, the core layer may be of any HDPE composition such as is described in our prior published EP-A-863177, GB-A-1470372 and GB-A-1492771. In particular, the synthetic paper comprises high density polyethylene. The term high density polyethylene (HDPE) as used throughout the specification is meant to include, unless otherwise specified, polymers and copolymers of ethylene with minor amounts of other α-olefin monomers as is commonly understood in the industry and as described in the above-mentioned GB-A specifications. The term also includes mixtures of high density polyethylenes.

The above core layer composition may optionally contain other additives such as e.g. an antioxidant and a lubricant.

The thickness of the core layer is suitably greater than about 10µm, preferably greater than about 40µm and is more preferably in the range from about 45-500µm.

In a preferred embodiment the composite plastics sheet comprises, on its surface opposite the printable surface, a layer of plastics material compatible with the material of the core layer. This layer, which is preferably a co-extruded layer, is selected to provide good heat-seal adhesion to blow-moulded HDPE bottles. In one embodiment this material may be of similar composition to the core layer but without the voiding agent. Most preferably the material has a lower melting point than the core layer and can comprise heat-seal materials such as low density polyethylene (LDPE), ethylene vinyl acetate copolymer (EVA), ethylene methacrylic acid copolymer (EMA) and ethylene acrylic acid copolymer (EAA).

Such materials are known to be co-extruded with the core layer of certain polyolefin films in order to improve the heat-activated adhesion characteristics, and any such processing layer materials are suitable. Thus the invention encompasses within its scope the possibility that such a layer may be present on both sides of the core layer. Where a separate printable surface coating is applied to the composite film, any co-extruded layer on that side of the film would necessarily be underneath the printable surface coating on that side. The density of the base layer is considered to be the average density of the core layer and any co-extruded layers.

The thickness of any outer co-extruded layer is suitably below 50µm, is preferably below 10µm and is more preferably from about 1 to 8µm.

In a further preferred embodiment the layer opposite the printable surface, which has been selected to provide good heat seal adhesion, can be embossed to reduce the risk of blistering during in-mould labelling. This layer is preferably between 3 and 6µm in thickness, more preferably between 4 and 5µm.

The composition of the outer co-extruded layer may also include other additives such as e.g. a lubricant (0-0.4% w/w); a wax, stearic acid or a metal stearate, especially calcium stearate; and an antistatic agent (0-6% w/w, preferably 2-4% w/w) of the ethoxylated amine type, all weights being based on the weight of the principal component of the composition.
The presence of fillers and/or pigments in the outer co-extruded layer(s) provides a better grip during stretching of the co-extruded composite film.

The core layer and one or more of the outer co-extruded layers may be co-extruded using co-extrusion equipment known in the plastics industry which may comprise one extruder for the composition employed to generate each layer and is adapted to feed a co-extrusion die fitted e.g. with appropriate flow distribution control or to feed a conventional die *via* an appropriate distributor block. When the co-extruded film or sheet comprises e.g. three layers with the core layer being sandwiched between two outer co-extruded layers this is preferably made in a single step using separate extruders for the core and outer layers but using a single die block.

The film or sheet so formed may be oriented by stretching in an uniaxial or biaxial direction(s) according to known methods and this may be carried out sequentially or simultaneously. It is preferable to orientate the film/sheet by simultaneous biaxial stretching. Such orientation may be achieved e.g. by co-extruding the layers in the form of a tube and inflating it in a known manner. However, to achieve a flat laying product, the layers are preferably co-extruded to form a continuous sheet or web which is then stretched employing a flat-bed stretching apparatus preferably of the type described in our prior published GB-A-1374574 and GB-A-1442113. Stretching of thermoplastic webs using such apparatus is described in our prior published GB-A-1490512.

When an additional printable surface coating is not used, the surface of the base layer should be capable of receiving print and, in such a case, has a surface which may be suitably textured or modified by the presence of a pigment and/or a filler, and suitably has a printability corresponding to a wettability of at least 0.4 mN/cm (40 dynes/cm).

The film or sheet produced from the formulations according to the present invention may be subjected to various treatments and surface coatings e.g. to enhance antistatic and printing qualities. It will be understood, however, that in the case where no separate printable coating is applied, and the base layer itself is destined to provide an external printable surface, it will usually be subjected to surface treatment such as oxidation *via* flame or corona discharge treatment to provide a more polar surface and the required wettability to more readily accept inks and coatings. Clearly, such treatments may be applied to the surface of any outer layer, whether or not such a layer is co-extruded to form the film or sheet.

Surface printable coatings that may be applied to the film or sheet so produced include aqueous coatings commonly used in the paper industry and especially latex-based coatings. Of particular value in the present context, however, are the coatings described in our prior published GB-A-2177413.

Preferably the coating solution comprises an aqueous system containing a polymeric binder, an absorbent pigment and an antistatic agent. Typically the binder: pigment dry weight ratio is in the range 15:100 to 50:100, preferably 22:100 to 35:100, and the antistatic agent : pigment dry weight ratio is from 0.4:100 to 2.5:100. The composition may also contain an insolubilizing agent.

The polymeric binder may be in an aqueous or latex suspension, preferably a latex suspension, and should contain carboxyl groups on the polymer chain of at least one polymeric constituent. The binder may comprise a single polymer or a mixture of polymers. The binder may comprise, for example, starch or protein modified chemically or by physical addition of other polymeric species. Alternatively the binder may comprise a carboxylated styrene-butadiene copolymer, an acrylic polymer or copolymer, or a vinyl acetate polymer or copolymer. Preferably, the binder comprises a carboxylated styrene-butadiene copolymer.

The binder content of the aqueous coating composition may be chosen to suit individual requirements, for example, the stiffness of the coated product. Preferably, the binder content of the composition is in the range 15 to 30% by weight based on the binder plus aqueous phase, and more preferably in the range 20 to 25%.

The absorbent filler may be any dispersible solid but is preferably an inorganic filler or pigment such as, for example, a calcium carbonate, china clay, titanium dioxide.

The antistatic agent can be, for example, an ethoxylated amine or other material as conventionally used as an antistatic agent in the manufacture of polyolefin film.

The insolubilizing agent is preferably a polyanionic zirconium compound, most preferably ammonium zirconium carbonate.

The invention will now be illustrated by the following Examples:

### EXAMPLE 1

A synthetic paper comprising a core layer and two outer co-extruded layers was produced as follows.

The following compound, consisting of a mixture of HDPE, particulate filler (CaCO₃, TiO₂), voiding agent and processing aids, was used to produce the core layer of the extruded material:

**BASE LAYER COMPOSITION**

| **Component** | **Wt%** |
|---|---|
| Ampacet 100575 60% CaCO₃ in HDPE | 16.40 |
| BP Chemicals HDPE Rigidex HD 6070EA | 8.19 |
| Ampacet 110534-I 60% TiO₂ in HDPE | 8.19 |
| BP Chemicals HDPE Rigidex HD 5502XA | 45.70 |
| BP Chemicals Polystyrene HF 888 | 4.09 |
| Omya Omyalene G.200 88% CaCO₃ in LDPE | 8.19 |
| DRT Dertoline MP 170 | 8.19 |
| Cabot Plasadd PE8999 | 0.66 |
| Ciba Geigy Irganox B215 | 0.23 |
| Akzo Nobel Chemicals Nourymix AS037 | 0.16 |

The following compound was used in the production of the two co-extruded outer layers:

| | wt % |
|---|---|
| BP Chemicals Novex V22 EVA | 50 |
| BP Chemicals HDPE Rigidex HD 5502XA | 22 |
| Basell Polypropylene KF6100 | 6 |
| Ampacet 11956-B TiO₂, CaCO₃ in LDPE/LLDPE* | 18 |
| Akzo Nobel Chemicals Nourymix AS037 | 4 |

| | |
|---|---|
| *Linear Low Density Polyethylene | |

The two compounds were formed into a continuous three layer film by a conventional three layer co-extrusion process. A film of approximately 1.3 mm thickness, with two outer co-extruded layers each of about 0.07 mm thickness, was formed by extrusion through a die. The composite sheet extrudate was cooled by a series of conditioning rolls such that the sheet temperature was controlled to approximately 120°C for optimal biaxial orientation.

The temperature stabilised sheet was then fed into a simultaneous biaxial stretching machine of the type described in GB-A-1442113 to give 4:1 stretching in both the machine direction (MD) and the transverse direction (TD). This gave rise to a plastic film of thickness 117 µm, and basis weight 70 g/m², with a density of 0.6 g/cm³.

The resulting product was subsequently used as a base layer in the production of a label for in-mould labeling. The film was coated on one side with a coating of the type described in our patent GB-A-2177413. This gave an 80 g/m² dried coated product. Label printing was carried out by offset litho and was followed by conventional die cutting.

The blow-moulding process was performed on conventional equipment of the type well known in the art. The labels were placed inside the mould and held in place by vacuum suction prior to mould closure and blow-moulding. Heat from the molten HDPE parison then caused the label and moulded article to become fused in such a manner that a high quality defect free label and bottle was produced.

### EXAMPLE 2

The procedure of Example 1 was repeated, except that the compound used for the basic or core layer was:

| | Wt % |
|---|---|
| Ampacet 111096 60% CaCO₃, in HDPE | 15.90 |
| ExxonMobil HDPE Paxon AL55-003 | 55.89 |
| Ampacet 111096 60% TiO₂ in HDPE | 7.95 |
| Nova Chemicals Polystyrene High Heat 1300 | 3.98 |
| Omya Omyalene G.200 88% CaCO₃ in LDPE | 7.95 |
| DRT Dertoline MP 170 | 7.95 |
| Ciba Geigy Irganox B215 | 0.22 |
| Akzo Nobel Chemicals Armostat 350 | 0.16 |

and the compound used for the two co-extruded outer layers was:

| | Wt % |
|---|---|
| ExxonMobil HDPE Paxon A155-003 | 69 |
| ExxonMobil LLDPE LL-1002 | 25 |
| Akzo Nobel Chemicals Armostat 350 | 6 |

The resulting plastic film was of thickness 105 microns, and basis weight 60 g/m², with a density of 0.57 g/cm³.

### EXAMPLE 3

The procedure of Example 1 was repeated, except that the compound used for the base or core layer was:

| | Wt % |
|---|---|
| Ampacet 111096 60% CaCO₃, in HDPE | 15.80 |
| ExxonMobil HDPE Paxon AL55-003 | 55.89 |
| Ampacet 111096 60% TiO₂ in HDPE | 7.89 |
| Nova Chemicals Polystyrene High Heat 1300 | 3.95 |
| Omya Omyalene G.200 88% CaCO₃ in LDPE | 7.89 |
| DRT Dertoline MP 170 | 7.89 |
| Ciba Geigy Irganox B215 | 0.22 |
| Akzo Nobel Chemicals Armostat 350 | 0.60 |

and the compound used for the two co-extruded outer layers was:

| | Wt % |
|---|---|
| ExxonMobil HDPE Paxon A155-003 | 65 |
| ExxonMobil LLDPE LL-1002 | 25 |
| Polyfil NSC-004 | 10 |

The resulting plastic film was of thickness 105 microns, and basis weight 60 g/m², with a density of 0.57 g/cm³.

## Claims

1. A composite plastics sheet that is suitable for use in in-mould labelling and is printable on at least one surface, which comprises a base layer and optionally a printable layer forming the printable surface, the base layer comprising a synthetic paper that is primarily of HDPE and includes a voided, biaxially orientated core layer containing a voiding agent and a filler, and a co-extruded layer on each side of the core layer; **characterised in that** the base layer has a density of 0.7g/cm³ or less.

2. A composite plastics sheet as claimed in claim 1, wherein the base layer has a density in the range 0.3 to 0.65 g/cm³.

3. A composite plastics sheet as claimed in claim 2, wherein the base layer has a density in the range 0.45 to 0.65 g/cm³

4. A composite plastics sheet as claimed in claim 3, wherein the base layer has a density in the range 0.55 to 0.65 g/cm³

5. A composite plastics sheet as claimed in any preceding claim, wherein the printable surface is provided by an additional printable coating.

6. A composite plastics sheet as claimed in any preceding claim, wherein the thickness of the core layer is greater than about 10µm, preferably greater than about 40µm, and more preferably in the range from about 45 to 500µm.

7. A composite plastics sheet as claimed in any preceding claim, wherein the thickness of any outer co-extruded layer is below 50µm, preferably below 10µm, and more preferably is from 1 to 8µm.

8. A composite plastics sheet as claimed in any preceding claim including, on its surface opposite the printable surface, a preferably co-extruded layer of plastics material compatible with the material of the core layer and providing heat-seal adhesion to blow-moulded bottles.

9. A composite plastics sheet as claimed in claim 8, wherein the heat-seal material has a lower melting point than the core layer.

10. A composite plastics sheet material as claimed in claim 9, wherein the heat-seal material comprises low density polyethylene (LDPE), ethylene vinyl acetate copolymer (EVA), ethylene methacrylic acid copolymer (EMA) or ethylene acrylic acid copolymer (EAA).

11. A composite plastics sheet as claimed in any of claims 8 to 10, wherein the heat-seal material is of similar composition to the core layer but without the voiding agent.

12. A composite plastics sheet as claimed in any of claims 8 to 11, wherein the heat-seal layer is between 3 and 6µm in thickness, preferably between 4 and 5µm.

13. A composite plastics sheet as claimed in any of claims 8 to 12, wherein the heat seal layer is embossed to reduce the risk of blistering during in-mould labelling.

14. A blow-moulded article having a label attached thereto by in-mould labelling, wherein the label comprises a composite plastics sheet as claimed in any preceding claim.

## Patentansprüche

1. Bogen aus Kunststoff-Verbundwerkstoff, der sich zur Verwendung für In-Mould-Labelling eignet und mindestens auf einer Oberfläche bedruckbar ist und welcher eine Basisschicht und optional eine bedruckbare Schicht umfasst, die die bedruckbare Oberfläche bildet, wobei die Basisschicht ein synthetisches Papier umfasst, das hauptsächlich aus HDPE besteht und eine Hohlraum-bildende, biachsial ausgerichtete Kernschicht umfasst, die ein Agens für das Hohlraumbildungsverfahren und einen Füllstoff enthält, sowie eine coextrudierte Schicht auf jeder Seite der Kernschicht; **dadurch gekennzeichnet, dass** die Basisschicht eine Dichte von 0,7 g/cm³ oder weniger aufweist.

2. Bogen aus Kunststoff-Verbundwerkstoff nach Anspruch 1, wobei die Basisschicht eine Dichte in dem Bereich von 0,3 bis 0,65 g/cm³ aufweist.

3. Bogen aus Kunststoff-Verbundwerkstoff nach Anspruch 2, wobei die Basisschicht eine Dichte in dem Bereich von 0,45 bis 0,65 g/cm³ aufweist.

4. Bogen aus Kunststoff-Verbundwerkstoff nach Anspruch 3, wobei die Basisschicht eine Dichte in dem Bereich von 0,55 bis 0,65 g/cm³ aufweist.

5. Bogen aus Kunststoff-Verbundwerkstoff nach einem der vorhergehenden Ansprüche, wobei die bedruckbare Oberfläche durch eine zusätzliche bedruckbare Beschichtung bereitgestellt ist.

6. Bogen aus Kunststoff-Verbundwerkstoff nach einem der vorhergehenden Ansprüche, wobei die Dicke der Kernschicht mehr als etwa 10 µm beträgt, vorzugsweise mehr als etwa 40 µm und insbesondere in dem Bereich von etwa 45 bis 500 µm liegt.

7. Bogen aus Kunststoff-Verbundwerkstoff nach einem der vorhergehenden Ansprüche, wobei die Dicke einer beliebigen äußeren coextrudierten Schicht unter 50µm liegt, vorzugsweise unter 10 µm und insbesondere bei 1 bis 8 µm liegt.

8. Bogen aus Kunststoff-Verbundwerkstoff nach einem der vorhergehenden Ansprüche, wobei dieser auf seiner Oberfläche, welche der bedruckbaren Oberfläche gegenüber liegt, eine vorzugsweise coextrudierte Schicht von Kunststoffmaterial umfasst, welches kompatibel zu dem Material der Kernschicht ist und eine Verschweißung mit einer blasgeformten Flasche durch Erwärmung bereitstellen kann.

9. Bogen aus Kunststoff-Verbundwerkstoff nach Anspruch 8, wobei das Material für das Verschweißen durch Erwärmung einen niedrigeren Schmelzpunkt hat als die Kernschicht.

10. Bogen aus Kunststoff-Verbundwerkstoff nach Anspruch 9, wobei das Schweißmaterial Low-Density Polyethylen (LDPE), Ethylenvinylacetatcopolymer (EVA), Ethylenmethacrylsäure-Copolymer (EMA) oder Ethylenacrylsäure-Copolymer (EAA) umfasst.

11. Bogen aus Kunststoff-Verbundwerkstoff nach einem der Ansprüche 8 bis 10, wobei das Material für das Verschweißen durch Erwärmung eine ähnliche Zusammensetzung wie die Kernschicht aufweist, aber ohne das Agens für das Hohlraumbildungsverfahren.

12. Bogen aus Kunststoff-Verbundwerkstoff nach einem der Ansprüche 8 bis 11, wobei die Schicht, die durch Verschweißen durch Erwärmung entsteht, eine Dicke zwischen 3 und 6 µm aufweist, vorzugsweise zwischen 4 und 5 µm.

13. Bogen aus Kunststoff-Verbundwerkstoff nach einem der Ansprüche 8 bis 12, wobei die Schweißschicht geprägt ist, um das Risiko von Blasenbildung während des In-Mould-Labelling-Verfahrens zu reduzieren.

14. Blasgeformter Gegenstand mit einem Etikett, welches durch In-Mould-Labelling daran befestigt ist, wobei das Etikett einen Bogen aus Kunststoff-Verbundwerkstoff nach einem der vorhergehenden Ansprüche umfasst.

## Revendications

1. Feuille de plastique composite qui convient à un marquage dans le moule et qui est apte à être imprimée sur au moins une face, comprenant une couche de base et de manière optionnelle une couche apte à être imprimée formant la face apte à être imprimée, la couche de base comprenant un papier synthétique qui est principalement formé de HDPE et inclut une couche centrale poreuse orientée de manière bi-axiale contenant un agent de porosité et une charge, et une couche centrale co-extrudée sur chacun des côtés de la couche, **caractérisée en ce que** la couche de base a une densité de 0,7 g / cm³ ou inférieure.

2. Feuille de plastique composite selon la revendication 1, dans laquelle la couche de base a une densité de 0,3 à 0,65 g / cm³.

3. Feuille de plastique composite selon la revendication 2, dans laquelle la couche de base a une densité de 0,45 à 0,65 g / cm³.

4. Feuille de plastique composite selon la revendication 3, dans laquelle la couche de base a une densité de 0,55 à 0,65 g / cm³.

5. Feuille de plastique composite selon l'une quelconque des revendications précédentes, dans laquelle la surface apte à être imprimée est procurée par un revêtement apte à être imprimé additionnel.

6. Feuille de plastique composite selon l'une quelconque des revendications précédentes, dans laquelle l'épaisseur de la couche centrale est supérieure à environ 10 µm, de manière préférée supérieure à environ 40 µm, et de manière encore plus préférée dans l'intervalle d'environ 45 à 500 µm.

7. Feuille de plastique composite selon l'une quelconque des revendications précédentes, dans laquelle l'épaisseur d'une couche co-extrudée externe quelconque est inférieure à 50 µm, de manière préférée inférieure à 10 µm, et de manière encore plus préférée est de 1 à 8 µm.

8. Feuille de plastique composite selon l'une quelconque des revendications précédentes comprenant, sur sa face opposée à la face apte à être imprimée, de manière préférée une couche co-extrudée d'un matériau plastique compatible avec le matériau de la couche centrale et procurant une adhérence résistant à la chaleur à des bouteilles moulées par soufflage.

9. Feuille de plastique composite selon la revendication 8, dans laquelle le matériau résistant à la chaleur a un point de fusion inférieur à celui de la couche centrale.

10. Feuille de plastique composite selon la revendication 9, dans laquelle le matériau résistant à la chaleur comprend un polyéthylène basse densité (LDPE), un copolymère d'acétate de vinyle et d'éthylène (EVA), un copolymère d'acide méthacrylique et d'éthylène (EMA) ou un copolymère d'acide acrylique et d'éthylène (EAA).

11. Feuille de plastique composite selon l'une quelconque des revendications 8 à 10, dans laquelle le matériau résistant à la chaleur est d'une composition similaire à celle de la couche centrale mais sans l'agent de porosité.

12. Feuille de plastique composite selon l'une quelconque des revendications 8 à 11, dans laquelle le matériau résistant à la chaleur a une épaisseur entre 3 et 6 µm, de manière préférée entre 4 et 5 µm.

13. Feuille de plastique composite selon l'une quelconque des revendications 8 à 12, dans laquelle le matériau résistant à la chaleur est gaufré pour éviter le risque de cloquage au cours du marquage dans le moule.

14. Article moulé par soufflage présentant un marquage fixé à celui-ci par marquage dans le moule dans lequel le marquage comprend une feuille de plastique composite telle que revendiquée dans l'une quelconque des revendications précédentes.
